# EUROPÄISCHE PATENTSCHRIFT

(11) **EP 1 925 492 B1**
(45) Veröffentlichungstag und Bekanntmachung des Hinweises auf die Patenterteilung: **17.01.2018**
(21) Anmeldenummer: 07022716.0
(22) Anmeldetag: 23.11.2007
(51) Int. Cl.: B60K 6/46, B60L 11/00, B60L 11/08, B60L 1/00, B60L 7/14, B60L 7/22, B60K 6/00, B60W 10/08, B60W 20/00, B60W 30/00, B66C 19/00, B60K 3/04, B60L 11/14, B66C 13/22

(54) **Portalhubstapler mit einem emissions- und wartungsarmen Turbinenantrieb**
Portal fork-lift truck with a turbine drive low in emissions and maintenance
Chariot cavalier doté d'un entraînement de turbine à faibles émissions et nécessitant peu d'entretien

(30) Priorität: 25.11.2006 DE 102006055749
(43) Veröffentlichungstag der Anmeldung: 28.05.2008
(73) Patentinhaber: Terex MHPS GmbH, 40597 Düsseldorf (DE)
(72) Erfinder: Bauer, Reinhard, Dipl.-Ing., 97280 Remlingen (DE)
(74) Vertreter: Moser Götze & Partner Patentanwälte mbB

(56) Entgegenhaltungen:
- DE-A1- 10 025 089
- DE-A1-102004 010 988
- US-A- 6 105 697
- US-A1- 2002 157 881
- US-A1- 2003 104 899

## Beschreibung

Die Erfindung betrifft einen Portalhubstapler mit einem elektrischen Antriebssystem, bestehend aus einem unteren und einem oberen Rahmen, die durch Stützen miteinander verbunden sind, wobei am Oberrahmen ein Hubwerk mit Hebezeugen angeordnet ist und der Unterrahmen aus Fahrwerksträgern mit elektrisch angetriebenen Rädern besteht, einem Stromerzeugungsaggregat, welches seine erzeugte elektrische Energie in einen Gleichspannungszwischenkreis einspeist, an welchem Wechselrichter zur Speisung der Fahr-, Hub- und Hilfsmotoren angeschlossen sind.

Der erfindungsgemässe Portalhubstapler, einer sogenannter Straddle-Carrier, ist weltweit in Seehäfen, Containertransportterminals zum Transportieren und Stapeln von Container einsetzbar und besonders dort geeignet, wo dieselbetriebene Fahrzeuge mit Lärm, Abgasen, Schmieröl und regelmässigem Wartungsaufwand schlecht betreibbar sind.

Dieselelektrische Antriebssysteme für solche Straddle-Carrier sind bekannt. Im Allgemeinen bestehen sie aus einem Dieselmotor mit Generator zur Erzeugung elektrischer Energie, einem Gleichspannungszwischenkreis, und mehreren, daran angeschlossenen regelbaren Wechselrichtern zur Drehstromspeisung der elektrischen Fahrwerks-, Hubwerks- und Hilfsmotoren.

Ein solches Antriebssystem zeigt z. B. DE 200 01 113 U1. Dort ist ein Fahrzeug mit Brennkraftmaschine und fremd erregtem Generator offenbart, welcher über einen ungesteuerten Gleichrichter in den Gleichspannungszwischenkreis einspeist, wobei die Brennkraftmaschine aus technischen Gründen nur ein Hubkolbenmotor sein kann, wie im folgenden erläutert wird:

Zur Energieerzeugung wird in DE 200 01 113 U1 eine Brennkraftmaschine mit Generator vorgeschlagen, wobei eine Steuer- und Regeleinheit die Drehzahl der Brennkraftmaschine entsprechend dem Leistungsbedarf des Fahrzeuges regelt und weiterhin ein Ausgangsspannungsregler die Erregung des Generators so regelt, das die Zwischenkreisspannung auf der Gleichstromschiene in einem vorgegeben, zulässigen Bereich haltbar ist. Somit ist der Generator also fremd erregt, nicht permanent erregt, da eine Permanenterregung sich nicht regeln lässt. Die Brennkraftmaschine kann dabei nur eine niedertourige Maschine, also z.B. ein Diesel- oder Benzinmotor sein, da bei einer sehr hochtourigen Brennkraftmaschine wie etwa einer Gasturbine mit nahezu 100000 U/min der technische Aufwand für einen fremd erregten Generator auf einem Fahrzeug viel zu gross wäre: Ein schweres und grosses Untersetzungsgetriebe wäre notwendig, da bei diesen hohen

Drehzahlen die Fliehkräfte auf die Läuferwicklungen eines fremd erregten Generators nicht mehr beherrschbar sind.

In DE 198 04 204 C2 wird ebenfalls ein elektrisches Antriebssystem mit Verbrennungsmotor für Schwerlastfahrzeuge vorgeschlagen, welches darüber hinaus noch eine Batterie zwecks Nutzung von Bremsenergie und Bereitstellung von Spitzenleistung enthält und ein Erfassungs- und Steuerungssystem zur bedarfsgerechten Steuerung der Leistungsabgabe des Verbrennungsmotors.

DE 197 45 094 A1 zeigt ebenfalls ein Serienhybridfahrzeug mit Verbrennungsmotor-Generator-Aggregat, Energieflusssteuerung und Batterie.

In DE 103 46 796 A1 ist statt einer Batterie ein Energiespeicher aus Ultrakondenstoren vorgeschlagen, welcher viel bessere Eigenschaften für Fahrzeuganwendungen hat als eine Batterie, z. B. höhere Leistungsdichte, Wartungsfreiheit, längere Lebensdauer.

In US 2002/0157881 A1 wird ein Stromerzeugungssystem für ein hybridelektrisches Kraftfahrzeug vorgeschlagen, das neben einem mit einer Kraftstoffquelle verbundenem Mikroturbinensystem wie einen Turbogenerator eine Energiesteuerung umfasst. Als Kraftstoff kommt beispielsweise Diesel, Erdgas oder Propangas zum Einsatz. Die Energiesteuerung ist elektrisch mit dem Turbogenerator verbunden, umfasst einen ersten und zweiten Umrichter und regelt die Kraftstoffzufuhr unabhängig von der Gleichstromspannung in einem Gleichspannungszwischenkreis. Auch weist das Stromerzeugungssystem einen Elektromotor, eine Fahrregelungseinheit sowie eine Traktionsbatterie auf. Die Traktionsbatterie stellt eine zusätzliche Stromquelle für den Elektromotor bei Bedarf dar. Bekannte Hybridantriebe sollen nachteilig in Bezug auf Lärm, Vibrationen, Ölverlust, Kühlmittelverlust, Emissionen und Geruch sein.

Die US 2003/0104899 A1 beschreibt ein Hybrid-Fahrzeug mit einem herkömmlichen Antriebsstrang, mit dem mechanisch ein Elektromotor gekoppelt ist. Das Fahrzeug ist mit einer Vielzahl von Hilfsstromeinheiten ausgestattet. Zumindest eine der Hilfsstromeinheiten umfasst eine Mikroturbine, einen Generator und einen Stromregler, der dem Elektromotor je nach Anforderung Strom aus den Hilfsstromeinheiten zur Verfügung stellt.

In DE 10 2004 010 988 A1 wird darüber hinaus ein Portalhubstapler mit Hybridantrieb vorgeschlagen, der entsprechend den üblichen Lastspielen eines Portalstaplers seine elektrische Energie aus 3 Quellen bezieht: Einem relativ kleinen Verbrennungsmotor mit Generator als primäre Energiequelle für die Erzeugung der mittlere Dauerleistung, einer Batterie für das Fahren mit hohen Geschwindigkeiten, und Ultrakondensatoren für die kurzzeitigen Leistungsspitzen beim Heben/Senken und Bremsen/Beschleunigen. Dabei kann der Verbrennungsmotor erheblich kleiner und leichter ausgeführt werden als üblich, und die Batterien haben eine längere Lebensdauer. Grösse und Gewicht beider Energiespeicher können dabei in vernünftigen Grenzen gehalten werden.

Alle diese bisher bekannten Antriebssysteme haben jedoch einen Verbrennungsmotor als primäre Energiequelle und daher zahlreiche verschiedene Nachteile.

So muss z. B. der Dieselmotor recht häufig gewartet werden: Motoröl und Ölfilter sind regelmässig zu wechseln, Kühlmittelstand und Frostschutz sind zu überprüfen, das Ventilspiel ist zu prüfen und einzustellen, u.v.m. Die grössere Menge an Altöl einer Fahrzeugflotte muss umweltfreundlich entsorgt werden. Schliesslich muss der Dieselmotor nach ca. 10 - 15 Tausend Betriebsstunden komplett ausgetauscht/erneuert werden, so dass für einen Straddle-Carrier, der üblicherweise eine Lebensdauer von mehr als 30000 Betriebstunden hat, u. U. mehrere neue Dieselmotoren gebraucht werden.

Dieselmotoren stossen auch schädliche Abgase in Mengen aus, die zukünftig immer weniger von Politik und Gesellschaft toleriert werden. Die Abgasnormen werden auch für Portalstapler immer mehr verschärft, so dass für deren Dieselmotore ein immer grösserer technischer Aufwand zur Abgasreinigung getrieben werden muss.

Nicht zu vergessen ist der Lärm eines Dieselmotors, der auf Straddle-Carriern mit grossen, schweren und teuren Schallschutzhauben gedämpft werden muss, um die Lärmschutzvorschriften vor allem in siedlungsnahen Hafenbetrieben einzuhalten.

Weiterhin ist bei bisherigen Straddle-Carriers als Nachteilig anzusehen, dass der Dieselmotor Vibrationen verursacht, die sich auf das Fahrzeug übertragen und schon häufig zu erschütterungsbedingten Schäden vor allem an der Elektronik der Frequenzumrichter und des Generators geführt haben, so dass aufwendige und teuere Reparaturen notwendig waren.

Es ist daher Aufgabe der Erfindung, die Nachteile des bekannten Standes der Technik zu beseitigen und einen Portalhubstapler zu entwickeln, der ein Antriebssystem aufweist, das mit deutlich weniger Wartung und Austausch auskommt, weniger schädliche Abgase und Lärm verursacht, durch ruhigen, vibrationsfreien Lauf die empfindliche Elektronik schont, und den Aufwand dafür in vertretbaren Grenzen hält.

Diese Aufgabe wird durch einen Portalhubstapler mit elektrischem Antriebssystem, bestehend aus einem unteren und einem oberen Rahmen, die durch Stützen miteinander verbunden sind, wobei am Oberrahmen ein Hubwerk mit Hebezeugen angeordnet ist und der Unterrahmen aus Fahrwerksträgern mit elektrisch angetriebenen Rädern besteht, einem Stromerzeugungsaggregat, welches seine erzeugte elektrische Energie in einem Gleichspannungszwischenkreis einspeist, an welchem Wechselrichter zur Speisung der Fahr-, Hub- und Hilfsmotoren angeschlossen sind, wobei das Stromerzeugungsaggregat eine Mikrogasturbine mit angebautem Stromgenerator darstellt, dessen Strom den Fahr-, Hub- und Hilfsmotoren zugeleitet wird, dem Stromerzeugungsaggregat ein elektrischer Energiespeicher zugeordnet ist, dessen Strom bedarfsweise den Fahr-, Hub- und Hilfsmotoren zugeleitet wird, dem Stromerzeugungsaggregat mit einer eingebauten Leistungselektronik und dem elektrischen Energiespeicher in der Weise ein elektronisches Steuergerät zugeordnet ist, dass Lastschwankungen in Bezug auf die von den Fahr-, Hub- und Hilfsmotoren abzunehmende elektrische Leistung und die von dem Stromgenerator erzeugte Leistung von dem Energiespeicher ausgeglichen werden, gelöst.

Unteransprüche geben vorteilhafte Ausgestaltungen der Erfindung wieder.

Die Erfindung sieht vor, dass an Stelle eines Stromaggregats mit Dieselmotor eine Mikroturbine mit Stromgenerator in den elektrischen Antriebsstrang des Straddle-Carriers integriert wird, wobei die Integration sowohl die Leistungselektronik als auch die Steuer- und Regelelektronik betrifft, und der technische Aufwand hierzu gering bleibt.

Derartige Mikroturbinen oder Mikrogasturbinen basieren auf der Technologie der Abgasturbolader und sind inzwischen in eine Richtung weiterentwickelt worden, die sie für einen Einsatz auf Elektro- oder Hybridfahrzeugen interessant werden liessen.

Die Mikroturbine hat einen instabilen Arbeitspunkt. Die von der Turbine erzeugte Leistung und die dem Generator abgenommene Leistung müssen übereinstimmen, damit sie bei

Lastschwankungen nicht abgewürgt wird (Strömungsabriss, "Stall") oder in gefährliche Überdrehzahlen durchgeht. Sie braucht daher ein Regelsystem, welches die abgenommene Leistung, Drehzahl, Turbineneinlasstemperatur und Kraftstoffzufuhr fein aufeinander abstimmt.

Eine solche Regelung ist möglich, indem Drehzahl und Einlasstemperatur der Turbine über Sensoren erfasst und einem elektronischen Steuergerät, dem Mikroprozessor, zugeführt werden, welche dann ein Kraftstoffregelventil ansteuert, um durch Einstellen der Kraftstoffmenge die Turbine in einem engen optimalen Drehzahl- und Temperaturbereich zu halten. Dabei muss dem Turbinengenerator auch immer die gleiche elektrische Leistung abgenommen werden, wozu die Regelung eine Leistungselektronik, z. B. IGBT-Wechselrichter, ansteuert. Ein Energiespeicher wie eine Akkumulatorbatterie muss deshalb die Lastschwankungen der zum Verbrauch abgegebenen elektrischen Leistung gegenüber der konstanten erzeugten Turbinenleistung ausgleichen.

Eine Weiterentwicklung dieser Regelung besteht darin, die erzeugte Turbinenleistung nicht mehr konstant zu halten, sondern bei Lastschwankungen durch Drehzahlverstellung auf die geforderte Last zu regeln wobei trotzdem die optimale Turbineneinlasstemperatur eingehalten wird. Das hat den Vorteil, dass auch im Teillastbetrieb nur geringe Wirkungsgradverluste auftreten. Ein Energiespeicher, z. B. Pufferbatterie, übernimmt bei Lastschwankungen nur noch zeitweise die elektrische Lastdifferenz, bis die Turbinenleistung nachgeregelt worden ist. Soll z. B. die geforderte Turbinenleistung durch Drehzahlerhöhung gesteigert werden, so senkt der Regler vorübergehend durch Ansteuern eines Wechselrichters die elektrische Leistungsabgabe des Generators, entlastet also die Turbine, damit diese bei konstanter Temperatur auf die neue Drehzahl hochlaufen kann, und erhöht dafür die Leistungsabgabe der Pufferbatterie, bis die neue Drehzahl und Leistung erreicht ist. Dann wird wieder die gesamte gebrauchte Leistung dem Generator entnommen.

Daraus ist ersichtlich, dass ein solches Mikroturbinen-Stromaggregat nur zusammen mit der eingebauten Leistungselektronik, einer digitalen Regelung und einer Speicherbatterie brauchbar funktioniert. Ohne diese Elektronik könnte der erzeugte Generatorstrom, der eine Frequenz von über 1600 Hertz hat, keine der üblichen Verbraucher versorgen und die Turbine könnte nicht stabil geregelt werden. Erst Leistungs- und Regelelektronik ermöglichen es zusammen mit der Batterie, bei Lastschwankungen der abgenommenen elektrischen Leistung die Turbine nicht abzuwürgen oder auf gefährlich hohe Drehzahlen zu beschleunigen.

Wollte man jedoch solche Mikroturbinenaggregate nach dem offengelegten Stand der Technik einfach auf einen Straddle-Carrier bauen, würden viele elektronische Komponenten unnötigerweise mehrfach vorhanden sein. So haben die Stromerzeugeraggregate, wie sie in oben genannten Dokumenten offen gelegt sind und für die Netzeinspeisung oder als Notstromaggregate konzipiert sind, intern schon einen Gleichstromzwischenkreis mit nachgeschaltetem Wechselrichter, um aus dem 1600 Hz-Drehstrom des Generators 50 Hz Wechselstrom abzugeben. Da der Straddle-Carrier aber ebenfalls einen eigenen Gleichstromzwischenkreis hat, müsste z. B. ein zusätzlicher, eigentlich überflüssiger Gleichrichter installiert werden, um den vom Mikroturbinenaggregat erzeugten 50-Hz-Wechselstrom nochmals gleichzurichten, und ihn dann in den Gleichstrom-Zwischenkreis des Straddle-Carriers einzuspeisen. Dieser Aufwand ist nicht vertretbar und würde unnötige Umwandlungsverluste nach sich ziehen.

Weiterhin benötigt die Mikroturbine zum Starten mit einer Batterie einen weiteren Wechselrichter. Dabei wird der Generator motorisch betrieben.

Die Mikroturbine muss mit möglichst geringen technischen Aufwand in das ansonsten vorgegebene - weil bewährte - elektrische Antriebssystem der Fahrzeuge integriert werden. Insbesondere muss die Anordnung und Verschaltung der Leistungselektronik wie Wechselrichter, Gleichrichter, DC/DC-Wandler so konfiguriert werden, dass man mit möglichst wenig Leistungselektronik auskommt.

Ausserdem ist in der Mikroturbine ein digitaler Regler anzuordnen, welcher bei Lastschwankungen der Verbraucher die erzeugte Turbinenleistung nachregelt. Dieser Regler ist aber nicht geeignet, um von sich aus die extremen Lastanforderungen des Straddle-Carriers auszuregeln, wenn z.B. der Fahrer von Fahrwerk und Hubwerk gleichzeitig hohe Leistungen abverlangt, welche in Summe die maximale Turbinenleistung im gegenwärtigen Arbeitspunkt übersteigen. Deshalb wird auch ein speziell für Straddle-Carrier konzipiertes Powermanagement-System benötigt, das heisst, eine eigene elektronische Energieflusssteuerung, welche die von der Turbine erzeugte Leistung und die von den Antrieben des Straddle-Carriers verbrauchte Leistung aufeinander abstimmt. Ähnliches gilt für die eingespeiste Spannung. Da einerseits die Generatorspannung wegen der Permanenterregung von der Turbinendrehzahl abhängt, andererseits aber die Zwischenkreisspannung immer etwas höher sein muss, als die Fahr- Hub- und Hilfsmotore des Fahrzeuges bei ihrer gegenwärtigen Drehzahl brauchen, muss die elektronische Steuerung auch die Zwischenkreisspannung beeinflussen. Die Powermanagement-Steuerung muss also speziell auf die Erfordernisse eines Straddle-Carriers, bei dem gleichzeitig unterschiedlichste Lastanforderungen von Fahr- und Hubantrieben überlagert auftreten, reagieren.

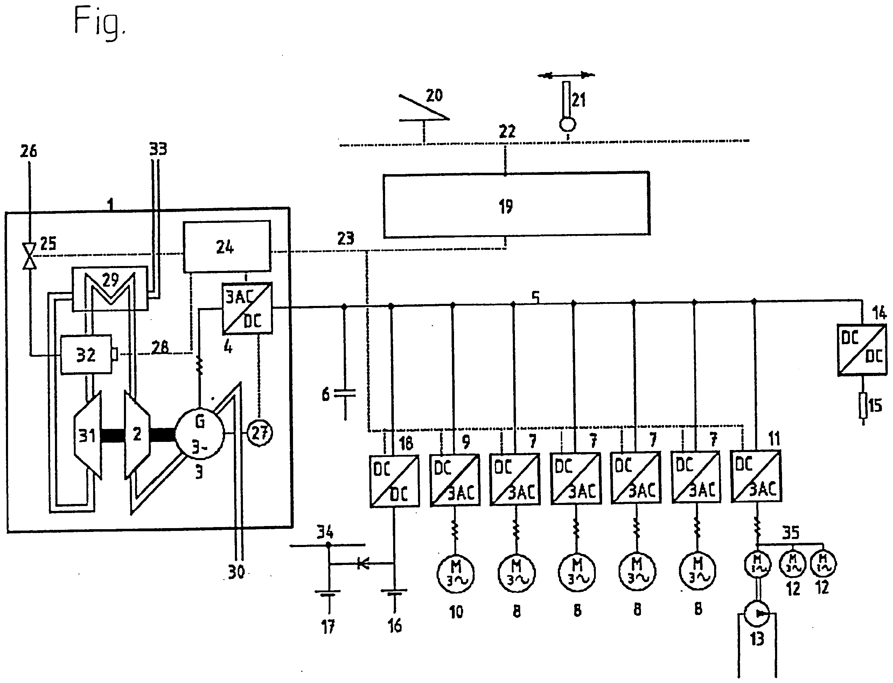

Schliesslich ist es vorteilhaft, auch die bisher von einem Dieselmotor direkt mechanisch angetriebenen Hilfsantriebe, wie Hydraulikpumpen für Lenkung, Bremsen und Spreader, die Lichtmaschine zur Ladung der Batterien und Versorgung des Bordnetzes, beispielsweise eines 24VDC-Bordnetzes, und die Klimatisierung der Fahrerkabine, mit Energie aus der Mikroturbine zu versorgen.
Folgende beispielhafte Konfiguration des elektrischen Antriebsstranges eines Portalhubstaplers oder Straddle-Carriers mit Mikroturbinenantrieb ist in der einzigen Figur gezeigt.

Der mittelfrequente Drehstrom aus dem Generator 3 der Mikroturbine 2 wird über einen pulsweitenmodulierbaren, regelbaren zwei-quadranten-Umrichter 4 direkt in den Gleichspannungszwischenkreis 5 des Straddle-Carriers eingespeist. An diesem sind direkt die Wechselrichter 7,9,11 für die Fahrwerks- 8 Hubwerks- 10 und Hilfsmotoren 12 angeschlossen, sowie über Bremschopper 14 die Bremswiderstände 15. Die beiden Batterien (eine Starterbatterie 16, und eine Batterie 17 für das 24V DC -Bordnetz zur Versorgung der Elektronik und der Beleuchtung sind über einen DC/DC-Wandler 18 (Hoch/Tiefsetzsteller) ebenfalls an den Gleichspannungszwischenkreis 5 angeschlossen.

Am Wechselrichter 11, der den Drehstrom für das 50Hz-Bordnetz (3AC400V) 35 und die Hilfsantriebe 12 erzeugt, ist zusätzlich zu den üblichen Hilfsmotoren für die Kühlpumpen der Fahrantriebe, den Lüfter des Hubwerksantriebs, und weiteren kleineren Motoren und Verbrauchern noch der Pumpenmotor 13 einer kleinen Hydraulikstation dazu angeschlossen, welche den Hydraulikdruck für Lenkung, Bremsen und den Spreader erzeugt. Bei einem hydraulikfreien Straddle-Carrier mit elektrischem Spreader, elektromagnetischen Bremsen und einer rein elektrischen Lenkung kann diese Hydraulikstation entfallen. Bei manchen handelsüblichen kompakten Mikroturbinen-Stromerzeugungsaggregaten ist ein Wechselrichter für 3AC400V 50Hz zwecks Netzeinspeisung bereits integriert. Dieser kann dann an Stelle des Bordnetz-Wechselrichters 11 das 50-Hz -3AC400V-Bordnetz und damit die Hilfsantriebe speisen.

Zum Starten der Mikroturbine 2 wird die Spannung der Starterbatterie 16 vom DC/DC-Wandler 18 auf das Spannungsniveau des Gleichspannungszwischenkreises 5, etwa 650 V DC, hochgesetzt, so dass die Starterbatterie 16 in den Zwischenkreis 5 einspeist, wobei aber alle Wechselrichter 7, 9, 11 noch gesperrt sind, bis auf den Einspeise -Wechselrichter 4 des Turbinengenerators 3. Dieser speist seinen aus der Gleichspannung erzeugten frequenzvariablen Drehstrom auf den Generator 3 der Mikroturbine 2 und dreht diese motorisch hoch. Ab einer bestimmten Drehzahl kann der Kraftstoff in der Brennkammer 32 der Turbine 2 gezündet werden, und die Turbine 2 läuft dann selbstständig weiter und kann Energie über den Einspeiseumrichter 4, welcher den Generator 3 nun generatorisch betreibt, in den Zwischenkreis 5 einspeisen. Der Wechselrichter 11 für das 50Hz-Bordnetz wird nun eingeschaltet, so dass Hydraulik, Kühlung und Lüftung mit Energie versorgt werden. Dann können auch die Wechselrichter 7, 9 für Fahrwerk und Hubwerk eingeschaltet werden, und das Fahrzeug kann seine Arbeit aufnehmen. Gleichzeitig werden die Batterien über den nun als Tiefsetzsteller funktionierenden DC/DC-Wandler 18 aus dem Zwischenkreis 5 von der Mikroturbine geladen.

Die Mikroturbine 2 kann in ihrer Leistung über die Drehzahl geregelt werden. Ein in der Turbine integrierter digitaler Regler 2 erfasst die Istdrehzahl der Turbine und die Turbineneintrittstemperatur über geeignete Sensoren 27, 28 und steuert deren Kraftstoffdrosselventil 25 entsprechend an. Die gewünschte Solldrehzahl oder Solleistung kann die elektronische Steuerung 19 des Straddle-Carrier über eine Feldbusanbindung 23 z. B. CAN-Bus dem Turbinenregler 24 digital vorgeben und so die erzeugte Leistung steuern. Die Leistungsverstellung über die Drehzahl hat den Vorteil, dass auch im Teillastbereich ein guter Wirkungsgrad und wenig Schadstoffausstoss erreicht werden, da die thermodynamisch wichtige Eintrittstemperatur in die Turbine in weiten Teillastbereichen nahezu konstant auf ihrem optimalen Wert gehalten werden kann.

Allerdings ändert sich mit Verstellung der Turbinendrehzahl proportional auch die Generatorspannung, da der Generator 3 von Permanentmagneten erregt wird und damit keine eigene Spannungsregelung haben kann. Da die Fahr-8 und Hubmotoren 10 für bestimmte Drehzahlen aber bestimmte Mindestspannungen auf dem Gleichspannungszwischenkreis 5 benötigen, muss das Powermanagement-System 19 nicht nur den Energiefluss zwischen Turbine 2 und Antrieben 8, 10, 12 auf einander abstimmen, sondern auch die jeweils erforderliche Zwischenkreisspannung mit berücksichtigen. Vorteilhaft ist es hier, den pulsweitenmodulierbaren Einspeiseumrichter 4 als Hochsetzsteller zu betreiben und die Zwischenkreisspannung durch Verstellen der Pulsweitenmodulation auf einen konstanten Sollwert zu regeln. Ein derartiger Spannungsregler kann auch im Mikroturbinen-Regelsystem 24 mit integriert sein.

Die Leistungssteuerung für das gesamte Fahrzeug kann beispielhaft auf folgende Weise geschehen:

Der Fahrer des Fahrzeuges gibt. mit dem Fahrpedal 20 das geforderte Drehmoment für die Fahrantriebe 8 vor, und mit einem Joystick 21 die geforderte Drehzahl für den Hubwerksantrieb 10. Die Sollwertvorgabe des Fahrers erfolgt über den 1. CAN-Bus 22 auf die elektronische Powermanagement-Steuerung 19 des Straddle-Carriers. Diese errechnet daraus die geforderte Soll-Leistung, indem sie die Sollwerte nach der Leistungsformel P = 2x 3,14 x n x M mit den Istwerten der einzelnen Antriebe multipliziert und aufsummiert. Die Soll-Leistung wird über einen 2. CAN-Bus 23 dem Turbinenregler 24 vorgegeben, welcher die Turbinendrehzahl entsprechend einstellt. Die gegenwärtige Istleistung des Stromerzeugungsaggregates 1, welche bis zum Nachregeln der Turbinenleistung ja unterschiedlich von der Soll-Leistung ist, wird vom Turbinenregler 24 z.B. durch die integrierte Strommessung des Einspeiseumrichters 4 erfasst und über den 2. CAN-Bus 32 der elektronischen Leistungssteuerung 19 des Straddle-Carrier mitgeteilt, welche dann die Drehmoment-Sollwerte für die Fahrwerksmotoren 8 und den Drehzahlsollwert für den Hubwerksmotor 10 solange begrenzt, bis die Turbine ihre Leistung nachgeregelt hat. Auch wenn der Fahrer dem Fahr- und Hubwerk in Summe mehr Leistung abverlangt, als die Turbine momentan liefern kann, werden dadurch die Leistungen von Fahr- und Hubwerk auf die gegenwärtige Istleistung des Stromerzeugungsaggregates begrenzt.

In weiteren Varianten des Ausführungsbeispiels kann anstatt der kleinen Starterbatterie 16 ein grösserer elektrischer Energiespeicher wie einer Traktionsbatterie oder auch Doppelschichtkondensatoren am Gleichspannungszwischenkreis 5 angeschlossen werden. Damit kann das Turbinen-Stromerzeugungsaggregat noch kleiner und leichter ausgeführt werden, da die Lastspitzen vom Energiespeicher übernommen werden und das Stromerzeugungsaggregat nur die mittlere Dauerleistung liefern muss. Ausserdem kann der Energiespeicher Senkenergien des Hubwerks und Bremsenergien des Fahrwerks zu späteren Nutzung zwischenspeichern und damit Kraftstoff sparen. Für Straddle-Carrier ist es besonders Vorteilhaft, eine Kombination aus Traktionsbatterie und Doppelschichtkondensatoren als Energiespeicher zu verwenden, da dieses einerseits die Lebensdauer der Traktionsbatterie erhöht sowie ihr Gewicht und ihre Grösse begrenzt, andererseits aber auch den Aufwand an teuren Doppelschichtkondensatoren in Grenzen hält.

Zwecks Heizung der Fahrerkabine kann der Mikroturbine ein Abgas-Wärmetauscher nachgeschaltet werden. In handelsüblichen Mikroturbinen-Aggregaten ist dieser oft schon integriert.

Der erfindungsgemässe Portalhubstapler weist folgende Vorteile auf:
Das Stromerzeugungsaggregat ist kleiner und leichter als ein vergleichbarer Dieselmotor-Generator.
Es hat im Gegensatz zum Dieselmotor kein Schmiersystem und keine Flüssigkeitskühlung und braucht daher erheblich weniger Wartung.
Es erzeugt viel weniger Lärm und braucht daher keine grosse, schwere Schallschutzhaube, um die Lärmschutzvorschriften einzuhalten.
Ebenso stösst es nur äusserst geringe Schadstoffmengen mit den Abgasen aus und bleibt schon ohne Abgasnachbehandlung weit unterhalb der vorgeschriebenen Abgasgrenzwerte.
Da es nur ein einziges bewegliches Teil hat, das zudem luftgelagert ist, hat es nur sehr wenig Verschleiss. Seine Lebensdauer ist daher viel grösser als die eines Dieselmotors, so dass ein Komplettaustausch während der Lebensdauer des Straddle-Carriers nicht mehr erforderlich ist.
Sein ruhiger, vibrationsarmer Lauf schont die erschütterungsempfindliche Fahrzeugelektrik, so dass weniger Ausfälle und Reparaturen zu erwarten sind.

### Liste der verwendeten Bezugszeichen

1 : Stromerzeugungsaggregat
2 : Mikroturbine
3 : Generator
4 : Einspeiseumrichter der Mikroturbine (pulsweitenmoduliert steuerbar in 2 Quadranten)
5 : Sammelschiene des Gleichspannungszwischenkreises des Straddle-Carriers
6 : Zwischenkreiskondensatoren
7 : Wechselrichter (regelbar) für die Fahrmotore
8 : Fahrwerksmotore
9 : Wechselrichter (regelbar) für den Hubwerksmotor
10 : Hubwerksmotor
11 : Wechselrichter (regelbar) für das Bordnetz, beispielsweise ein 3AC400V-Bordnetz der Hilfsantriebe
12 : Hilfsmotore (Hydraulikpumpen, Kühlerpumpen, Lüfter, Klimageräte, Heizungen etc.)
13 : Hydraulikpumpe für Lenkung, Bremsen, Spreader
14 : Bremschopper (DC/DC-Wandler, Tiefsetzsteller)
15 : Bremswiderstand
16 : Starterbatterie
17 : Batterie für Elektronik und Beleuchtung, z. B. 24V DC - Bordnetz
18 : Lade/Entladeregler für Akkumulatorbatterien (Hoch/Tiefsetzsteller, DC/DC-Wandler)
19 : Elektronische Steuerung des Straddle-Carriers mit Energieflusssteuerung (Power-Management)
20 : Fahrpedal
21 : Joystick (Meisterschalter) für Hubwerk
22 : 1. CAN-Bus (Fahrzeugbus)
23 : 2. CAN-Bus (Antriebsbus)
24 : Regler des Mikroturbinen-Aggregates
25 : Kraftstoffregelventil
26 : Kraftstoffzufuhr
27 : Drehzahlsensor
28 : Temperatursensor
29 : Rekuperator
30 : Lufteinlass für Mikroturbinenaggregat mit Luftkühlung des Generators
31 : Verdichterrad
32 : Brennkammer
33 : Abgase
34 : Sammelschiene des Bordnetzes für Elektronik und Beleuchtung (24V DC - Bordnetzes)
35 : Sammelschiene des Bordnetzes für die Hilfsantriebe (3AC 400V - Bordnetz)

## Patentansprüche

1. Portal hubstapler mit elektrischem Antriebssystem, bestehend aus einem unteren und einem oberen Rahmen, die durch Stützen miteinander verbunden sind, wobei am Oberrahmen ein Hubwerk mit Hebezeugen angeordnet ist und der Unterrahmen aus Fahrwerksträgern mit elektrisch angetriebenen Rädern besteht, einem Stromerzeugungsaggregat, welches seine erzeugte elektrische Energie in einen Gleichspannungszwischenkreis einspeist, an welchem Wechselrichter zur Speisung der Fahr-, Hub- und Hilfsmotoren angeschlossen sind, **dadurch gekennzeichnet, dass**
- das Stromerzeugungsaggregat (1) eine Mikrogasturbine (2) mit angebautem Stromgenerator (3) darstellt, dessen Strom den Fahr-, Hub- und Hilfsmotoren (8, 10, 12) zugeleitet wird,
- dem Stromerzeugungsaggregat (1) ein elektrischer Energiespeicher zugeordnet ist, dessen Strom bedarfsweise den Fahr-, Hub- und Hilfsmotoren (8, 10, 12) zugeleitet wird,
- dem Stromerzeugungsaggregat (1) mit einer eingebauten Leistungselektronik und dem elektrischen Energiespeicher in der Weise ein elektronisches Steuergerät zugeordnet ist, dass Lastschwankungen in Bezug auf die von den Fahr-, Hub- und Hilfsmotoren (8, 10, 12) abzunehmende elektrische Leistung und die von dem Stromgenerator (3) erzeugte Leistung von dem Energiespeicher ausgeglichen werden.

2. Portalhubstapler nach Anspruch 1, **dadurch gekennzeichnet, dass** die Mikrogasturbine (2) luftgelagert ist.

3. Portalhubstapler nach Anspruch 1, **dadurch gekennzeichnet, dass** die Mikrogasturbine (2) und der Generator (3) luftgekühlt sind.

4. Portalhubstapler nach Anspruch 1, **dadurch gekennzeichnet, dass** der Generator (3) eine permanent erregte elektrische Drehstrommaschine darstellt.

5. Portalhubstapler nach Anspruch 1, **dadurch gekennzeichnet, dass** der Stromgenerator (3) seinen Strom direkt über einen steuerbaren Umrichter (4) in eine Sammelschiene (5) des Gleichspannungszwischenkreises des Portalhubstaplers einspeist.

6. Portalhubstapler nach Anspruch 1, **dadurch gekennzeichnet, dass** am Stromerzeugungsaggregat (1) ein eigener Regler (24) angeordnet ist, der die Betriebsgrössen Leistung, Drehzahl und Temperatur der Turbine einzeln, gemeinsam, oder in Kombination auf vorgebbare Sollwerte regelt.

7. Portalhubstapler nach Anspruch 6, **dadurch gekennzeichnet, dass** vor den Fahrwerks-, Hilfs- und Hubwerksmotoren (8, 10, 12) (Pumpen, Lüfter, etc.) regelbare Wechselrichter (7, 9, 11) angeordnet sind.

8. Portalhubstapler nach Anspruch 7, **dadurch gekennzeichnet, dass** am Regler (24) für das Stromerzeugungsaggregat (1) eine elektronische Energieflusssteuerung (19) des Portalhubstaplers angeordnet ist, welche die Leistung und Spannung von Stromerzeugungsaggregat (1) und Antriebsmotoren (8, 10, 12) aufeinander abstimmt, wobei dem Regler (24) des Stromerzeugungsaggregates (1) und den regelbaren Wechselrichtern (7, 9, 11) der Antriebsmotore (8, 10, 12) entsprechende Sollwerte vorgegeben werden.

9. Portalhubstapler nach Anspruch 7, **dadurch gekennzeichnet, dass** die Wechselrichter (7, 9,11) -Gleichstrom- zu Drehstrom -Wandler (DC/3AC) darstellen.

10. Portalhubstapler nach Anspruch 1, **dadurch gekennzeichnet, dass** an der Sammelschiene (5) des Zwischenkreises eine Starterbatterie (16) angeordnet ist, die zum Starten der Turbine (2) genutzt wird, indem der Einspeise-Umrichter (4) des Stromerzeugungsaggregates (1) motorisch den Generator (3) antreibt, bis die Turbine (2) zündet.

11. Portalhubstapler nach Anspruch 10, **dadurch gekennzeichnet, dass** an der Starterbatterie (16) ein Lade-/Entladeregler (18) angeordnet ist.

12. Portalhubstapler nach Anspruch 1, **dadurch gekennzeichnet, dass** an der Sammelschiene (5) des Zwischenkreises direkt oder indirekt ein elektrischer Energiespeicher angeordnet ist, der Lastschwankungen ausgleicht und Brems- und Senkenergie einspart.

13. Portalhubstapler nach Anspruch 12, **dadurch gekennzeichnet, dass** als Energiespeicher eine Traktionsbatterie oder ein Doppelschichtkondensator angeordnet ist.

14. Portalhubstapler nach Anspruch 13, **dadurch gekennzeichnet, dass** ein Doppelschichtkondensator und eine Batterie bedarfsweise als Energiespeicher eingesetzt werden.

15. Portalhubstapler nach Anspruch 1, **dadurch gekennzeichnet, dass** an der Mikrogasturbine (2) ein Wärmetauscher angeordnet ist.

## Claims

1. Straddle carrier having an electric drive system consisting of a lower and an upper frame which are connected to one another by supports, wherein a lifting mechanism with hoists is disposed on the upper frame, and the lower frame consists of running gear unit carriers with electrically driven wheels, a current generation assembly which feeds its generated electric power into a direct voltage intermediate circuit to which inverters for supplying travel, lifting and auxiliary motors are connected, **characterised in that**
- the current generation assembly (1) constitutes a micro gas turbine (2) having an attached current generator (3), the current of which is supplied to the travel, lifting and auxiliary motors (8, 10, 12),
- the current generation assembly (1) is allocated an electric power storage unit, the current of which is supplied as required to the travel, lifting and auxiliary motors (8, 10, 12),
- the current generation assembly (1) with installed power electronics and the electric power storage unit is allocated an electronic control unit in such a way that load variations in relation to the electric power to be consumed by the travel, lifting and auxiliary motors (8, 10, 12) and the power generated by the current generator (3) are evened out by the power storage unit.

2. Straddle carrier as claimed in claim 1, **characterised in that** the micro gas turbine (2) is air-mounted.

3. Straddle carrier as claimed in claim 1, **characterised in that** the micro gas turbine (2) and the generator (3) are air-cooled.

4. Straddle carrier as claimed in claim 1, **characterised in that** the generator (3) constitutes a permanently excited electric three-phase current machine.

5. Straddle carrier as claimed in claim 1, **characterised in that** the current generator (3) feeds its current directly into a bus bar (5) of the direct voltage intermediate circuit of the straddle carrier by way of a controllable converter (4).

6. Straddle carrier as claimed in claim 1, **characterised in that** a dedicated regulator (24) is disposed on the current generation assembly (1) and regulates the operating variables of power, speed of rotation and temperature of the turbine individually, together or in combination to achieve preset reference values.

7. Straddle carrier as claimed in claim 6, **characterised in that** inverters (7, 9, 11) which can be regulated are disposed upstream of the running gear unit, auxiliary and lifting mechanism motors (8, 10, 12) (pumps, fans, etc.).

8. Straddle carrier as claimed in claim 7, **characterised in that** an electronic power flow controller (19) of the straddle carrier is disposed on the regulator (24) for the current generation assembly (1), said power flow controller matching power and voltage of the current generation assembly (1) and drive motors (8, 10, 12) to one another, wherein reference values corresponding to the regulator (24) of the current generation assembly (1) and to the regulatable inverters (7, 9, 11) of the drive motors (8, 10, 12) are specified.

9. Straddle carrier as claimed in claim 7, **characterised in that** the inverters (7, 9, 11) constitute direct current to three-phase current transducers (DC/3AC).

10. Straddle carrier as claimed in claim 1, **characterised in that** a starter battery (16) is disposed on the bus bar (5) of the intermediate circuit and is used to start the turbine (2) **in that** feed converter (4) of the current generation assembly (1) drives the generator (3) by motor until the turbine (2) fires.

11. Straddle carrier as claimed in claim 10, **characterised in that** a charging/discharging regulator (18) is disposed on the starter battery (16).

12. Straddle carrier as claimed in claim 1, **characterised in that** an electric power storage unit is directly or indirectly disposed on the bus bar (5) of the intermediate circuit and evens out load variations and saves braking and lowering power.

13. Straddle carrier as claimed in claim 12, **characterised in that** a traction battery or a double layer capacitor is disposed as the power storage unit.

14. Straddle carrier as claimed in claim 13, **characterised in that** a double layer capacitor and a battery are used as a power storage unit as required.

15. Straddle carrier as claimed in claim 1, **characterised in that** a heat exchanger is disposed on the micro gas turbine (2).

## Revendications

1. Chariot élévateur de type portique à système d'entraînement électrique, constitué d'un cadre inférieur et d'un cadre supérieur qui sont reliés entre eux par des montants, un dispositif de levage équipé d'un engin de levage étant disposé sur le cadre supérieur et le cadre inférieur étant constitué de supports de mécanisme de roulement pourvus de roues à entraînement électrique, une unité de génération de courant qui alimente avec son énergie électrique générée un circuit intermédiaire à tension continue auquel des onduleurs sont raccordés pour alimenter les moteurs de roulement, les moteurs de levage et les moteurs auxiliaires, **caractérisé en ce que**
- l'unité de génération de courant (1) est une micro-turbine à gaz (2) à générateur de courant rapporté (3) dont le courant est amené aux moteurs de roulement, aux moteurs de levage et aux moteurs auxiliaires (8, 10, 12),
- l'unité de génération de courant (1) est associée à un accumulateur d'énergie électrique dont le courant est amené, en cas de besoin, aux moteurs de roulement, aux moteurs de levage et aux moteurs auxiliaires (8, 10, 12),
- l'unité de génération de courant (1) est associée à une électronique de puissance intégrée et l'accumulateur d'énergie électrique est associée à une unité de commande électronique de telle manière que des variations de charge par rapport à la puissance électrique doivent absorber les moteurs de roulement, les moteurs de levage et les moteurs auxiliaires (8, 10, 12) et la puissance électrique générée par le générateur de courant (3) sont compensées par l'accumulateur d'énergie.

2. Chariot élévateur de type portique selon la revendication 1, **caractérisé en ce que** la micro-turbine à gaz (2) est à suspension pneumatique.

3. Chariot élévateur de type portique selon la revendication 1, **caractérisé en ce que** la micro-turbine à gaz (2) et le générateur (3) sont refroidis par air.

4. Chariot élévateur de type portique selon la revendication 1, **caractérisé en ce que** le générateur (3) est une machine électrique triphasée à excitation permanente.

5. Chariot élévateur de type portique selon la revendication 1, **caractérisé en ce que** le générateur de courant (3) alimente avec son courant, directement via un survolteur commandable (4), une barre collectrice (5) du circuit intermédiaire à courant continu du chariot élévateur de type portique.

6. Chariot élévateur de type portique selon la revendication 1, **caractérisé en ce que** l'unité de génération de courant (1) comporte un régulateur propre (24) qui régule les paramètres de fonctionnement puissance, vitesse de rotation et température de la turbine individuellement ou conjointement en combinaison à des valeurs de consigne pouvant être prédéterminées.

7. Chariot élévateur de type portique selon la revendication 6, **caractérisé en ce que** des onduleurs réglables (7, 9, 11) sont disposés en amont des moteurs de mécanismes de roulement, des moteurs auxiliaires et des moteurs de mécanismes de levage (8, 10, 12) (pompes, ventilateurs, etc.).

8. Chariot élévateur de type portique selon la revendication 7, **caractérisé en ce que** le régulateur (24) destiné à l'unité le génération de courant (1) comporte une commande de flux d'énergie électronique (19) du chariot élévateur de type portique, laquelle adapte entre elles la puissance et la tension de l'unité de génération de puissance (1) et des moteurs d'entraînement (8, 10, 12), des valeurs de consigne correspondantes étant prescrites au régulateur (24) de l'unité de génération de puissance (1) et aux onduleurs (7, 9, 11) des moteurs d'entraînement (8, 10, 12).

9. Chariot élévateur de type portique selon la revendication 7, **caractérisé en ce que** les onduleurs (7, 9, 11) sont des convertisseurs courant continu-courant triphasé (DC/3AC).

10. Chariot élévateur de type portique selon la revendication 1, **caractérisé en ce qu'**une batterie de démarrage (16) est disposée sur la barre collectrice (5) du circuit intermédiaire, laquelle batterie de démarrage est utilisée pour démarrer la turbine (2) **en ce que** le survolteur d'alimentation (4) de l'unité de génération de courant (1) entraîne par action motrice le générateur (3) jusqu'à l'allumage de la turbine (2).

11. Chariot élévateur de type portique selon la revendication 10, **caractérisé en ce que** la batterie de démarrage (16) comporte un régulateur de charge/décharge (18).

12. Chariot élévateur de type portique selon la revendication 1, **caractérisé en ce que** la barre collectrice (5) du circuit intermédiaire comporte directement ou indirectement un accumulateur d'énergie électrique qui compense les fluctuations de charge et économise l'énergie dissipée et de freinage.

13. Chariot élévateur de type portique selon la revendication 12, **caractérisé en ce qu'**une batterie de traction ou un condensateur à double couche est utilisé comme accumulateur d'énergie.

14. Chariot élévateur de type portique selon la revendication 13, **caractérisé en ce qu'**un condensateur à double couche et une batterie sont utilisés, si besoin est, comme accumulateur d'énergie.

15. Chariot élévateur de type portique selon la revendication 1, **caractérisé en ce que** la micro-turbine à gaz (2) comporte un échangeur de chaleur.
